# EUROPEAN PATENT APPLICATION

(11) **EP 4 429 223 A1**
(43) Date of publication of application: **11.09.2024**
(21) Application number: 23191630.5
(22) Date of filing: 16.08.2023
(51) Int. Cl.: H04N 1/60

(54) **INFORMATION PROCESSING APPARATUS, INFORMATION PROCESSING SYSTEM, AND PROGRAM**

(30) Priority: 08.03.2023 JP 2023035283
(71) Applicant: FUJIFILM Business Innovation Corp., Minato-ku Tokyo (JP)
(72) Inventor: HASEGAWA, Maki, Yokohama-shi, Kanagawa (JP); TAKAHASHI, Kazuyuki, Yokohama-shi, Kanagawa (JP); TOMODA, Kyotaro, Yokohama-shi, Kanagawa (JP)
(74) Representative: Kurig, Thomas

(57) **Abstract**

An information processing apparatus includes a processor configured to acquire information regarding characteristics of a test image on a recording medium, which is formed under a predetermined image forming condition by an image forming section, and a paper white region of the recording medium, in which the test image is not formed, output a comparison result obtained by comparing the characteristic of the test image formed on the recording medium to a target value corresponding to a characteristic in a case where the test image is formed on a predetermined standard recording medium under the image forming condition, and correct the target value based on a difference between a paper white characteristic and a reference characteristic, the paper white characteristic being a characteristic of the paper white region of the recording medium, and the reference characteristic being a characteristic of the standard recording medium on which an image is not formed.

## Description

### BACKGROUND OF THE INVENTION

### (i) Field of the Invention

The present invention relates to an information processing apparatus, an information processing system, and a program.

### (ii) Description of Related Art

JP2021-192489A discloses an image forming apparatus that outputs a gradation chart including a white region, reads the output gradation chart with a scanner, and performs calibration by using a brightness value in the white region. In the image forming apparatus, the brightness value in the white region used for performing the calibration is corrected based on a determination result of the variance of brightness in the white region of the gradation chart.

### SUMMARY OF THE INVENTION

In order to determine a state or the like of an image forming section, a test image formed on a recording medium by the image forming section may be evaluated by measuring the characteristic of the test image and comparing the measured value with a predetermined target value of the characteristic.

The target value used for evaluating the test image is generally determined assuming a case where the test image is formed on a predetermined standard recording medium. In this case, in a case where the test image is formed on a recording medium different from the standard recording medium, it may not be possible to accurately perform the evaluation.

An object of the present invention is to evaluate a test image formed on a recording medium with higher accuracy, as compared with a case where a target value of a characteristic is not corrected based on a measured value of a paper white region of a recording medium.

According to a first aspect of the present disclosure, there is provided an information processing apparatus including a processor configured to acquire information regarding characteristics of a test image on a recording medium, which is formed under a predetermined image forming condition by an image forming section, and a paper white region of the recording medium, in which the test image is not formed, output a comparison result obtained by comparing the characteristic of the test image formed on the recording medium to a target value corresponding to a characteristic in a case where the test image is formed on a predetermined standard recording medium under the image forming condition, and correct the target value based on a difference between a paper white characteristic and a reference characteristic, the paper white characteristic being a characteristic of the paper white region of the recording medium, and the reference characteristic being a characteristic of the standard recording medium on which an image is not formed.

According to a second aspect of the present disclosure, there is provided an information processing apparatus according to the first aspect, in which the processor may be configured to acquire information regarding characteristics of a plurality of test images with different image forming conditions, correct the target value for each of the image forming conditions, based on the difference between the paper white characteristic of the recording medium and the reference characteristic of the standard recording medium, and output the comparison result obtained by comparing the characteristic of each of the test images to the target value for each of the image forming conditions.

According to a third aspect of the present disclosure, there is provided an information processing apparatus according to the second aspect, in which the processor may be configured to calculate a difference between characteristics of images formed on the recording medium and the standard recording medium, based on the difference between the paper white characteristic of the recording medium and the reference characteristic of the standard recording medium, for each of the image forming conditions, and correct the target value for each of the image forming conditions, based on a difference in characteristic for each of the image forming conditions.

According to a fourth aspect of the present disclosure, there is provided an information processing apparatus according to the third aspect, in which the processor may be configured to calculate the difference in the characteristic for each of the image forming conditions, based on a provisional image forming condition in which the difference between the characteristics of the images formed on the recording medium and the standard recording medium is 0 in a graph indicating a relationship between the image forming condition and the difference between the characteristics of the images formed on the recording medium and the standard recording medium.

According to a fifth aspect of the present disclosure, there is provided an information processing apparatus according to any one of the first to fourth aspects, in which the processor may be configured to acquire information regarding an RGB signal of the test image formed with an image density predetermined as the image forming condition, as the information regarding the characteristic of the test image, and correct the target value based on a difference between an RGB signal in the paper white region of the recording medium, which is the paper white characteristic, and an RGB signal of the standard recording medium, which is the reference characteristic.

According to a sixth aspect of the present disclosure, there is provided an information processing apparatus according to any one of the first to fifth aspects, in which the processor may be configured to output information regarding the difference between the paper white characteristic of the recording medium and the reference characteristic of the standard recording medium, together with the comparison result.

According to a seventh aspect of the present disclosure, there is provided an information processing apparatus according to any one of the first to sixth aspects, in which the processor may be further configured to output information regarding the correction of the target value.

According to an eighth aspect of the present disclosure, there is provided an information processing system including an image forming apparatus that forms a test image on a recording medium under a predetermined image forming condition, and outputs reading information obtained by reading the test image and a paper white region in which the test image is not formed on the recording medium, and an information processing apparatus that acquires, from the reading information, information regarding characteristics of the test image on the recording medium and the paper white region, and outputs a comparison result obtained by comparing the characteristic of the test image formed on the recording medium to a target value corresponding to a characteristic in a case where the test image is formed on a predetermined standard recording medium under the image forming condition, in which the information processing apparatus corrects the target value based on a difference between a paper white characteristic and a reference characteristic, the paper white characteristic being a characteristic of the paper white region of the recording medium, and the reference characteristic being a characteristic of the standard recording medium on which an image is not formed.

According to a ninth aspect of the present disclosure, there is provided a program causing a computer to realize a function of acquiring information regarding characteristics of a test image on a recording medium, which is formed under a predetermined image forming condition by an image forming section, and a paper white region of the recording medium, in which the test image is not formed, a function of outputting a comparison result obtained by comparing the characteristic of the test image formed on the recording medium to a target value corresponding to a characteristic in a case where the test image is formed on a predetermined standard recording medium under the image forming condition, and a function of correcting the target value based on a difference between a paper white characteristic and a reference characteristic, the paper white characteristic being a characteristic of the paper white region of the recording medium, and the reference characteristic being a characteristic of the standard recording medium on which an image is not formed.

According to the first aspect of the present disclosure, it is possible to evaluate a test image formed on a recording medium with higher accuracy, as compared with a case where a target value of a characteristic is not corrected based on a measured value of a paper white region of a recording medium.

According to the second aspect of the present disclosure, it is possible to evaluate a plurality of test image with different image forming conditions, with higher accuracy, as compared with a case where a target value for each of image forming conditions is not corrected.

According to the third aspect of the present disclosure, it is possible to evaluate a test image with higher accuracy, as compared with a case where a target value for each of image forming conditions is not corrected based on a difference in characteristic for each of the image forming conditions.

According to the fourth aspect of the present disclosure, it is possible to evaluate a test image with higher accuracy, as compared with a case where a difference in characteristic for each of image forming conditions is not calculated based on a provisional image forming condition in which a difference between characteristics of images formed on a recording medium and a standard recording medium is 0.

According to the fifth aspect of the present disclosure, it is easy to accurately determine an image density of each test image, as compared with a case where a target value is not corrected based on RGB signals of a paper white region and a standard recording medium.

According to the sixth aspect of the present disclosure, a user can know information regarding a recording medium on which a test image is formed, in addition to an evaluation result of the test image.

According to the seventh aspect of the present disclosure, a user can know information regarding correction of a target value in addition to an evaluation result of a test image.

According to the eighth aspect of the present disclosure, it is possible to evaluate a test image formed on a recording medium with higher accuracy, as compared with a case where a target value of a characteristic is not corrected based on a measured value of a paper white region of a recording medium.

According to the ninth aspect of the present disclosure, it is possible to evaluate a test image formed on a recording medium with higher accuracy, as compared with a case where a target value of a characteristic is not corrected based on a measured value of a paper white region of a recording medium.

### BRIEF DESCRIPTION OF THE DRAWINGS

Exemplary embodiment(s) of the present invention will be described in detail based on the following figures, wherein:
Fig. 1 is a diagram illustrating an example of a diagnosis system;
Fig. 2 is a diagram illustrating an example of a hardware configuration of an information processing unit provided in a server apparatus and an image forming apparatus;
Fig. 3 is a diagram illustrating the image forming apparatus;
Fig. 4 is a diagram illustrating an example of chart paper generated by an image forming unit;
Fig. 5 is a diagram illustrating a correlation between an output image density and an RGB signal output from an image reading device in a case where an image formed by the image forming unit is read;
Fig. 6 is a diagram illustrating an example of a relationship between the RGB signal and the output image density in a case where images having different input image densities are formed on each of standard paper and paper of a type different from the standard paper;
Fig. 7 is a diagram illustrating a relationship between the input image density and a difference in RGB signal between an image formed on standard paper and an image formed on non-standard paper;
Fig. 8 is a diagram illustrating a procedure for correcting a target value used for evaluating a test image;
Fig. 9 is a diagram illustrating the procedure for correcting the target value used for evaluating the test image; and
Fig. 10 is a diagram illustrating an evaluation of a test image performed by a CPU of the server apparatus.

### DETAILED DESCRIPTION OF THE INVENTION

Hereinafter, an exemplary embodiment of the present invention will be described with reference to the accompanying drawings.

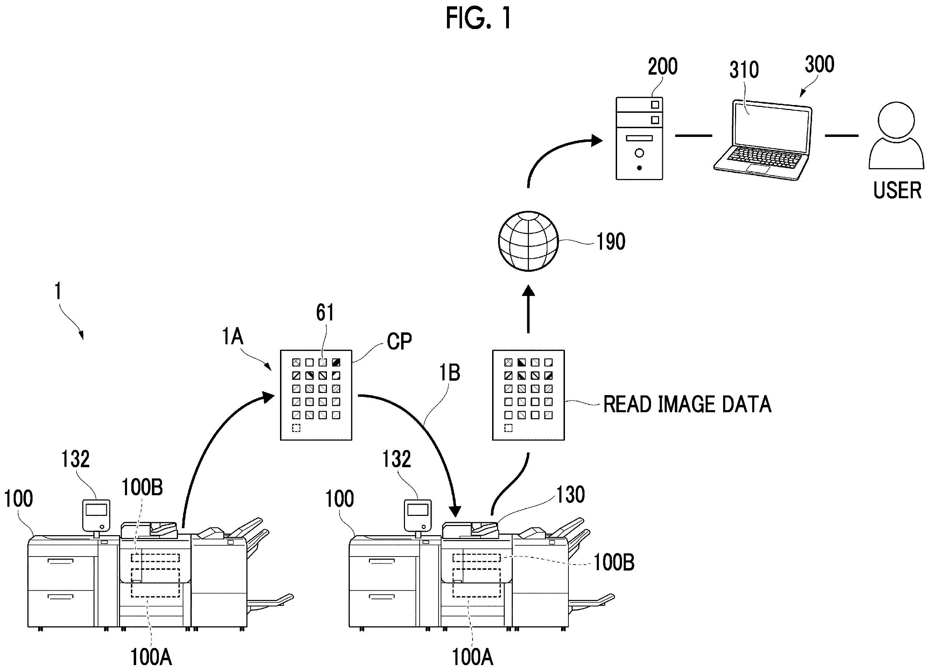

Fig. 1 is a diagram illustrating an example of a diagnosis system 1.

The diagnosis system 1 according to the present exemplary embodiment is provided with a plurality of image forming apparatuses 100 and a server apparatus 200 that is connected to each of the plurality of image forming apparatuses 100 via a communication line 190. The diagnosis system 1 is an example of an information processing system. In the present exemplary embodiment, in the server apparatus 200 as an example of an information processing apparatus, diagnosis of each image forming apparatus 100 is performed.

Further, the diagnosis system 1 in the present exemplary embodiment is provided with a user terminal 300 that is connected to the server apparatus 200 and receives an operation from a user.

In Fig. 1, one image forming apparatus 100 among a plurality of image forming apparatuses 100 is displayed.

The user terminal 300 is provided with a display device 310. The user terminal 300 is realized by a computer. Examples of the form of the user terminal 300 include a personal computer (PC), a smartphone, and a tablet terminal.

The image forming apparatus 100 is provided with an image forming unit 100A as an example of an image forming section that forms an image on paper which is an example of a recording medium.

For example, the formation of an image on paper by the image forming unit 100A is performed by an inkjet method or an electrophotographic method. In addition, the formation of an image on paper by the image forming unit 100A is not limited to the inkjet method or the electrophotographic method, but may be performed by other methods.

The image forming apparatus 100 is further provided with an information processing unit 100B. The information processing unit 100B executes various processes executed in the image forming apparatus 100.

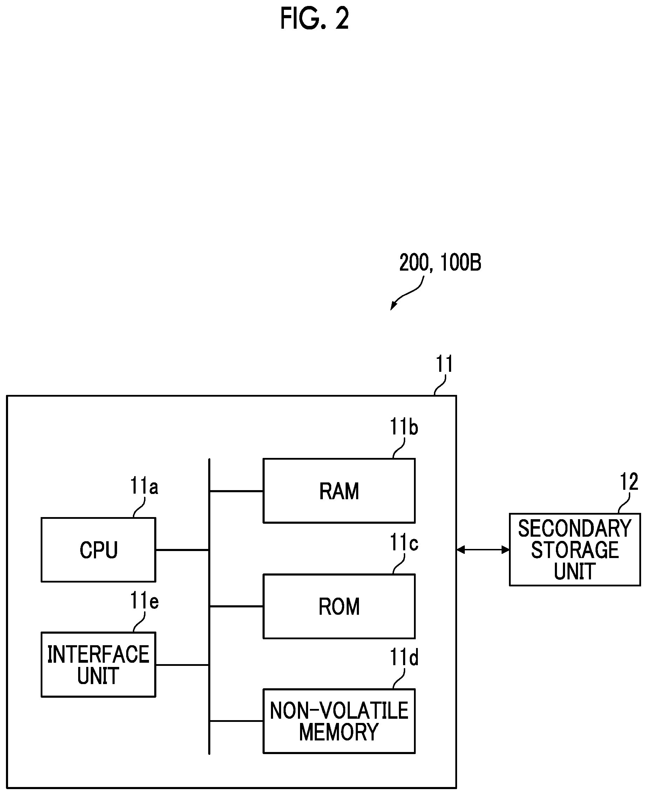

Fig. 2 is a diagram illustrating an example of a hardware configuration of the information processing unit 100B provided in the server apparatus 200 and the image forming apparatus 100. The information processing unit 100B provided in the server apparatus 200 and the image forming apparatus 100 is realized by a computer.

Each of the server apparatus 200 and the information processing unit 100B includes an arithmetic processing unit 11 that executes a digital arithmetic process according to a program, and a secondary storage unit 12 that stores information.

The secondary storage unit 12 is realized, for example, by a known information storage device such as a hard disk drive (HDD), a semiconductor memory, or a magnetic tape.

The arithmetic processing unit 11 is provided with a CPU 11a as an example of a processor.

In addition, the arithmetic processing unit 11 is provided with a RAM 11b used as a working memory or the like of the CPU 11a and a ROM 11c in which programs or the like executed by the CPU 11a are stored.

In addition, the arithmetic processing unit 11 is provided with a non-volatile memory 11d that is configured to be rewritable and can hold data even in a case in which power supply is interrupted and an interface unit 11e that controls each unit, such as a communication unit, connected to the arithmetic processing unit 11.

The non-volatile memory 11d is configured by, for example, an SRAM or a flash memory that is backed up by a battery. The secondary storage unit 12 stores the programs executed by the arithmetic processing unit 11 in addition to files and the like.

In the present exemplary embodiment, the arithmetic processing unit 11 reads the program stored in the ROM 11c or the secondary storage unit 12 to perform each process.

Here, the program executed by the CPU 11a may be provided to the server apparatus 200 in a state of being stored in a computer-readable recording medium such as a magnetic recording medium (such as a magnetic tape or a magnetic disk), an optical recording medium (such as an optical disk), a magneto-optical recording medium, or a semiconductor memory. The program executed by the CPU 11a may be provided to the server apparatus 200 by using a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The process executed by the image forming apparatus 100 among processes described below is executed by the CPU 11a provided in the image forming apparatus 100.

The process executed by the server apparatus 200 among the processes described below is executed by the CPU 11a as an example of the processor provided in the server apparatus 200.

Further, the process for diagnosing the image forming apparatus 100 among the processes described below is executed by the server apparatus 200 as an example of the information processing apparatus. The information processing system that executes the process for diagnosing the image forming apparatus 100 may be realized by one apparatus such as one server apparatus 200, or may be realized by a plurality of apparatuses.

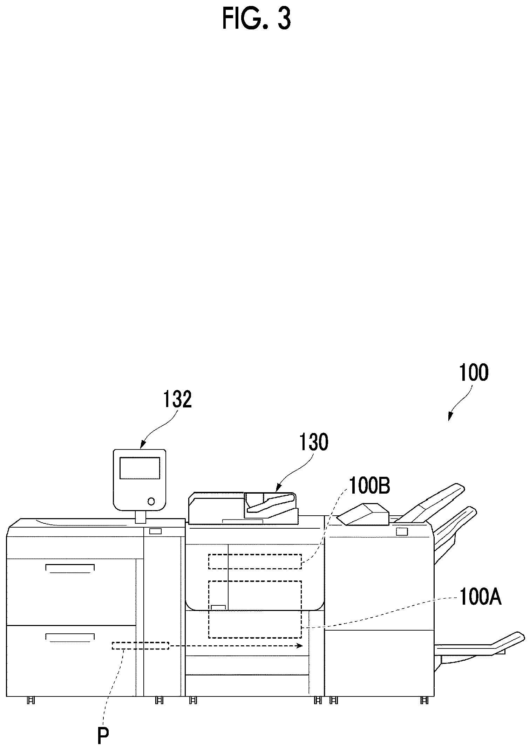

Fig. 3 is a diagram illustrating the image forming apparatus 100.

In the present exemplary embodiment, as described above, the image forming apparatus 100 is provided with the image forming unit 100A that forms an image on paper P which is an example of a recording medium.

In the present exemplary embodiment, in a case where the paper P passes through the image forming unit 100A, the paper P passes through the image forming unit 100A in a state where one side of the paper P faces the image forming unit 100A.

The image forming apparatus 100 is further provided with an image reading device 130 that reads an image formed on a recording medium such as paper.

Such an image reading device 130 is a so-called scanner having a function of transporting the paper. The image reading device 130 includes a light source that emits light to paper and a light receiving unit that receives reflected light from the paper. In the present exemplary embodiment, read image data is generated based on the reflected light received by the light receiving unit. For example, the light receiving unit is configured by a 3-line type color CCD sensor or the like. In the image reading device 130, the light receiving unit performs photoelectric conversion of the reflected light from the paper to generate an electrical signal including R (red), G (green), and B (blue) (referred to as an RGB signal) as the read image data.

A reading position of an image is set in advance in the image reading device 130, and the image reading device 130 reads an image at a portion of paper that is sequentially transported, which is located at the reading position.

The image forming apparatus 100 has an information transmission function of transmitting information to the server apparatus 200 (see Fig. 1). The image forming apparatus 100 transmits the read image data generated by the image reading device 130 to the server apparatus 200.

In the example illustrated in Fig. 3, the image reading device 130 is provided above the image forming apparatus 100. The image reading device 130 sequentially reads paper (not illustrated) set by the user. The paper is not limited to paper on which an image is formed by the image forming apparatus 100, and may be paper on which an image is formed by another image forming apparatus.

An installation form of the image reading device 130 is not limited to the form illustrated in Fig. 3. The image reading device 130 may be provided inside the image forming apparatus 100 and on a transport path of paper P.

In this case, the paper P on which an image is formed by the image forming unit 100A sequentially passes through the image reading device 130, and at the time of passing through the paper P, each image of the paper P is read in order.

In the present exemplary embodiment, the image reading device 130 is provided with a paper reversing mechanism so that the paper can be supplied after the front and back sides have been reversed with respect to the reading position of the image.

Thus, in the present exemplary embodiment, the paper on which an image formed on one side is read can be reversed and supplied to the reading position again. As a result, images on the front and back sides of the paper can be read.

In addition, in reading an image on paper, the paper may be placed on a platen (not illustrated) configured by plate-shaped glass or the like so that the paper placed on the platen may be read.

Further, each image forming apparatus 100 is provided with an operation reception unit 132 that receives an operation from the user. The operation reception unit 132 is configured by a so-called touch panel. The operation reception unit 132 displays information for the user and receives an operation performed by the user.

The display of information for the user and the reception of the operation by the user are not limited to being performed by one operation reception unit 132 as in the present exemplary embodiment. The operation reception unit and the information display unit may be provided separately.

In the present exemplary embodiment, in a case in which the image forming apparatus 100 (see Fig. 1) is diagnosed, first, the image forming unit 100A is operated to form a chart image 61 on paper. Thus, as indicated by the reference sign 1A, chart paper CP which is the paper on which the chart image 61 that is an example of a diagnosis image has been formed is generated.

A chart image 61 is an image used to diagnose the image forming apparatus 100. In the present exemplary embodiment, the chart paper CP which is the paper on which the chart image 61 used for the diagnosis has been formed is generated.

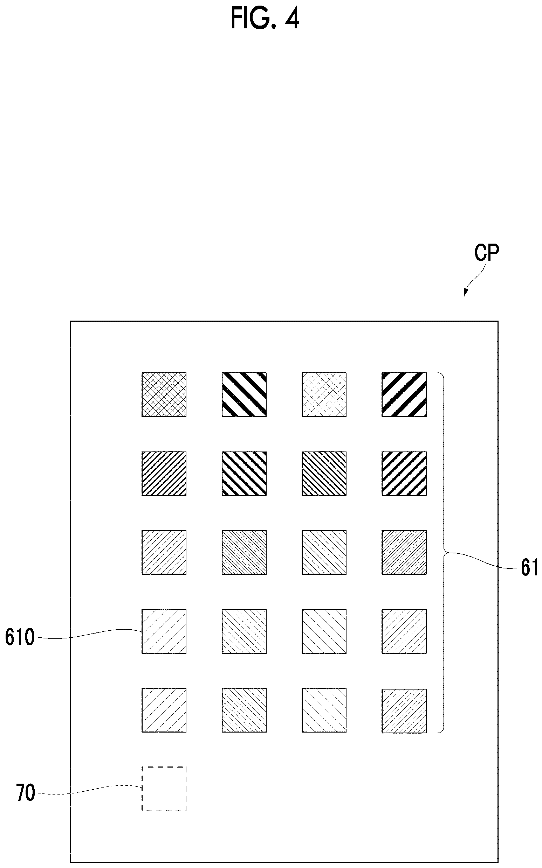

Fig. 4 is a diagram illustrating an example of chart paper CP generated by the image forming unit 100A.

As illustrated in Fig. 4, the chart image 61 includes a plurality of test images 610 formed under different image forming conditions. In this example, each test image 610 is formed in a rectangular shape. Further, in this example, as the plurality of test images 610 formed under different image forming conditions, a plurality of single-color images with different densities of images input to the image forming unit 100A (input image densities Cin described later) are formed, for example, for each of the K color, the C color, the M color, and the Y color.

The chart paper CP on which the chart image 61 is formed includes a paper white region 70 in which an image including the chart image 61 is not formed. In addition, in the paper white region 70 of the chart paper CP, the surface of the paper forming the chart paper CP is exposed without being covered with the image.

The chart image 61 on the chart paper CP in Fig. 4 is an example for description, and the form of the chart image 61 is not particularly limited.

In a case where the chart paper CP is generated, the chart paper CP is installed on the image reading device 130 as indicated by the reference sign 1B in Fig. 1. The image reading device 130 is used to read the chart paper CP on which the chart image 61 is formed.

As a result, read image data obtained by reading the chart paper CP is generated. In the present exemplary embodiment, the read image data is an example of reading information.

In the present exemplary embodiment, the read image data is transmitted to the server apparatus 200 and then is stored in the server apparatus 200. The server apparatus 200 diagnoses the image forming apparatus 100 based on the read image data.

In the present exemplary embodiment, a user who uses the diagnosis system 1 in the present exemplary embodiment, such as a maintainer who maintains the image forming apparatus 100, accesses the server apparatus 200 and refers to the result of the diagnosis by the server apparatus 200.

In each image forming apparatus 100, as described above, the chart paper CP is generated and the chart paper CP is read, and thus the read image data is generated.

The read image data is transmitted from each image forming apparatus 100 to the server apparatus 200. As described above, in the present exemplary embodiment, the server apparatus 200 diagnoses the image forming apparatus 100.

A diagnosis process executed by the server apparatus 200 will be described.

In the present exemplary embodiment, the CPU 11a (see Fig. 2) as an example of the processor provided in the server apparatus 200 diagnoses the image forming apparatus 100 based on the above-described read image data transmitted from the image forming apparatus 100, and then acquires the diagnosis result which is the result of the diagnosis. In addition, in the present exemplary embodiment, the CPU 11a of the server apparatus 200 evaluates the test image 610 included in the chart image 61 that is an example of the read image data transmitted from the image forming apparatus 100, as a diagnosis of the image forming apparatus 100.

More specifically, the CPU 11a compares the characteristic of each test image 610 to a target value of the characteristic of the test image 610 determined for each image forming condition, for the chart image 61 that is an image formed on the chart paper CP. Then, the CPU 11a evaluates each test image 610 based on the comparison result. For example, in a case where a difference between the characteristic of each test image 610 and the target value is within a predetermined range, the CPU 11a acquires a diagnosis result of a good evaluation. In addition, for example, in a case where the difference between the characteristic of each test image 610 and the target value exceeds the predetermined range, the CPU 11a acquires a diagnosis result of a bad evaluation.

The CPU 11a of the server apparatus 200 transmits information regarding the acquired diagnosis result from the server apparatus 200 to the user terminal 300. For example, a screen for displaying the diagnosis result is displayed on the user terminal 300. Thus, the user grasps the diagnosis result for a predetermined diagnostic item.

The target value of the characteristic used for evaluating the test image 610 in the chart image 61 is determined assuming a case where the chart image 61 is formed on predetermined standard paper (standard recording medium). In addition, the target value of the characteristic used for evaluating the test image 610 is determined corresponding to the characteristic of the test image 610 obtained in a case where the image forming apparatus 100 in a predetermined state forms the chart image 61 on the standard paper.

Here, for example, a user who operates the image forming apparatus 100 may select paper of a type different from predetermined standard paper, as the paper on which the chart image 61 is formed. In the paper of the type different from the standard paper, even in a case where the image forming unit 100A forms the chart image 61 under the same image forming condition, the characteristic of the test image 610 included in the chart image 61 may differ from the characteristic of the test image 610 formed on the standard paper. In this case, in a case where the characteristic of the test image 610 in the chart image 61 formed on paper of a type different from the standard paper is compared to the target value of the characteristic predetermined assuming the standard paper, it is difficult to accurately evaluate the test image 610.

On the contrary, in the present exemplary embodiment, the CPU 11a of the server apparatus 200 corrects the target value of the characteristic used for evaluating the test image 610 included in the chart image 61, based on the difference between the characteristic of a paper white region 70 in the chart paper CP on which the chart image 61 is formed, and the characteristic of the standard paper on which an image is not formed.

Thus, even in a case where the chart image 61 is formed on paper P of a type different from the standard paper, the test image 610 included in the chart image 61 can be accurately evaluated.

A process executed by the CPU 11a of the server apparatus 200 will be specifically described below.

Here, a case where the chart image 61 formed on the chart paper CP includes a plurality of test images 610 with different densities of images input to the image forming unit 100A (referred to as the input image densities Cin below), as the image forming condition, will be described as an example.

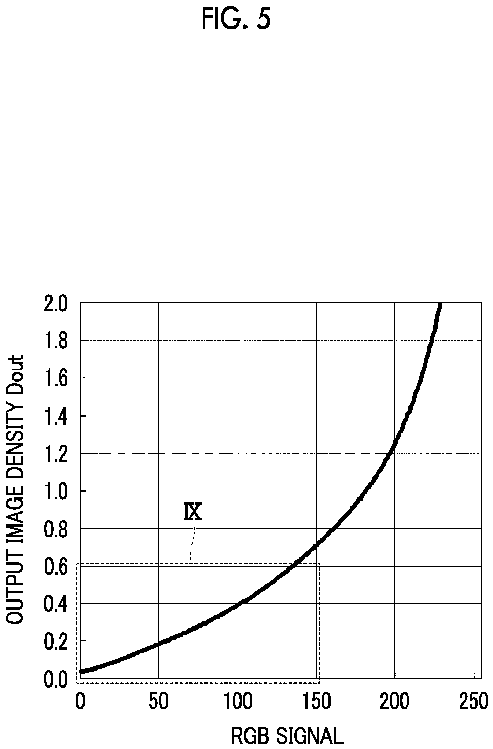

Fig. 5 illustrates a correlation between an RGB signal output from the image reading device 130 in a case where an image formed by the image forming unit 100A is read, and the density of the image formed by the image forming unit 100A (referred to as an output image density Dout below). Fig. 5 illustrates the correlation between the RGB signal and the output image density Dout in a case where the image formed by the image forming unit 100A is a single-color image of K colors having different input image densities Cin.

As illustrated in Fig. 5, the RGB signal of the image formed by the image forming unit 100A is correlated with the output image density Dout such that the output image density Dout increases as the RGB signal becomes larger. Here, normally, the correlation between the RGB signal of an image formed by the image forming unit 100A and the output image density Dout is common to the model of the image forming apparatus 100 and the type of paper on which the image is formed by the image forming unit 100A.

The CPU 11a of the server apparatus 200 acquires, from the image forming apparatus 100, the RGB signal of each test image 610 in the chart paper CP output from the image forming unit 100A. Then, the CPU 11a compares the output image density Dout corresponding to the acquired RGB signal of each test image 610 to a target value D of the output image density Dout determined based on the model of the image forming apparatus 100 and predetermined standard paper. Further, the CPU 11a evaluates the test image 610 from the result of comparing the output image density Dout of the test image 610 to the target value D.

Furthermore, in the present exemplary embodiment, the CPU 11a corrects the target value D used for evaluating the test image 610, based on the difference between the RGB signal of the paper white region 70 in the chart paper CP and the RGB signal of the standard paper.

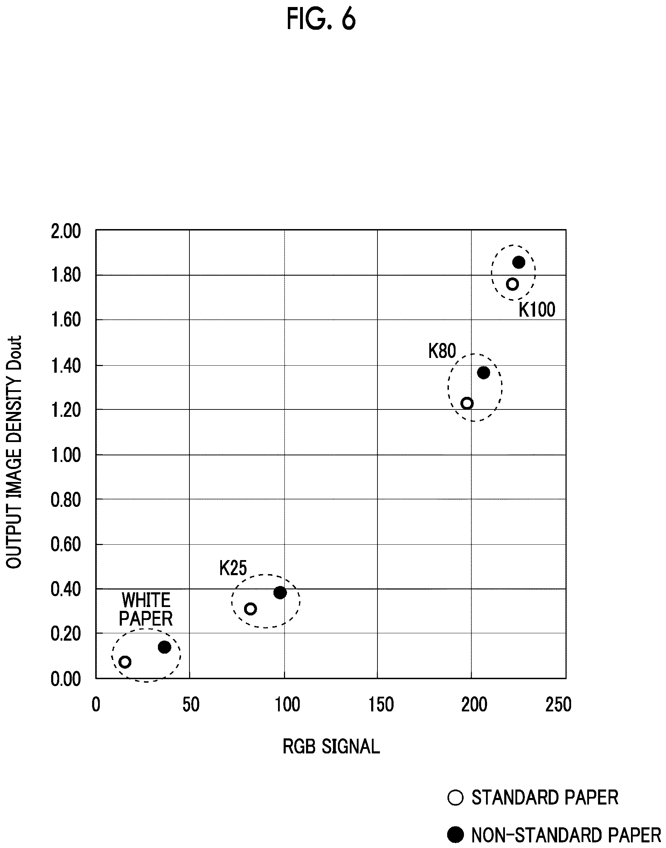

Fig. 6 is a diagram illustrating an example of the relationship between the RGB signal and the output image density Dout in a case where images having different input image densities Cin are formed on each of standard paper and paper of a type different from the standard paper. Here, Fig. 6 illustrates the relationship between the RGB signal and the output image density Dout in a case where a single-color image of the K color, which has the input image density Cin of 0% (paper white), 25% (K25), 80% (K80), and 100% (K100) is formed as the image having different input image densities Cin. The input image density Cin of 0% means that an image is not formed on standard paper or paper of a type different from the standard paper.

In the following description, the paper of the type different from the standard paper may be referred to as non-standard paper.

As illustrated in Fig. 6, in a case where the input image density Cin is equal, the RGB signal and the output image density Dout of an image formed on non-standard paper are larger than the RGB signal and the output image density Dout of an image formed on the standard paper. This is because paper in which the degree of whiteness is high and the degree of RGB is low is selected as the standard paper in many cases.

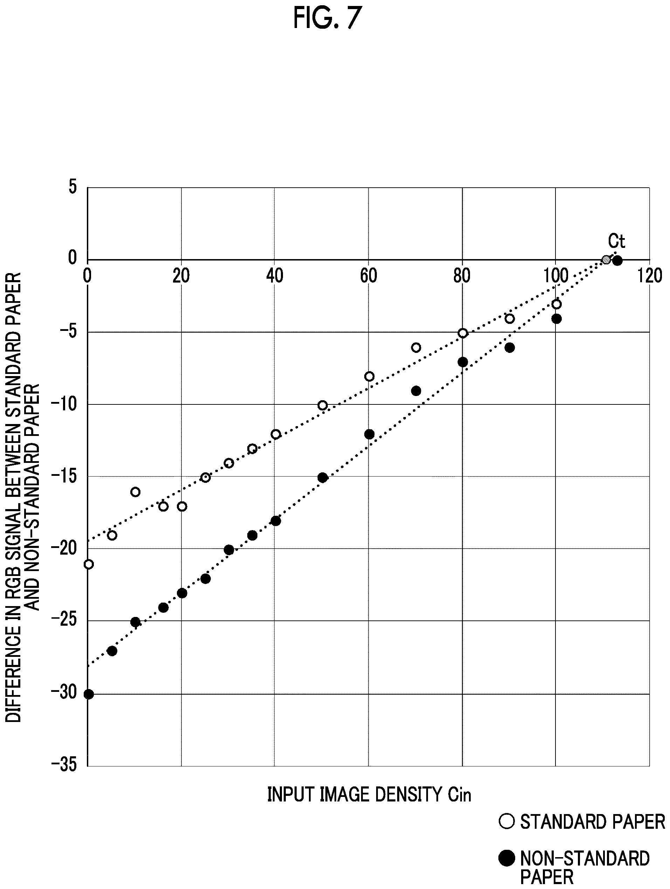

As illustrated in Fig. 7, as the input image density Cin becomes smaller, the difference between the RGB signal of the image formed on the standard paper and the RGB signal of the image formed on the non-standard paper increases. Further, as the input image density Cin becomes more, the difference between the RGB signal of the image formed on the standard paper and the RGB signal of the image formed on the non-standard paper decreases. This is considered to be because the more the input image density Cin is, the more the surface of the paper is covered with the toner or ink forming the image, and the influence of the difference in paper is less likely to occur on the image formed on the paper.

Here, a case in which the target value D used for evaluating the test image 610 is uniformly corrected based on the difference between the RGB signal of the paper white region 70 in the chart paper CP and the RGB signal of the standard paper, regardless of the input image density Cin of the test image 610 is considered. In this case, in the test image 610 having a high input image density Cin, the target value D used for evaluating the test image 610 may be excessively corrected, and the accurate evaluation of the test image 610 may be more difficult than the test image 610 having a low input image density Cin.

As described below, the CPU 11a in the present exemplary embodiment corrects, for each input image density Cin, the target value D used for evaluating the test image 610 based on the difference between the RGB signal of the paper white region 70 in the chart paper CP and the RGB signal of the standard paper.

Fig. 7 is a diagram illustrating the relationship between the input image density Cin and the difference in RGB signal between an image formed on standard paper and an image formed on non-standard paper. In addition, Fig. 7 illustrates a plot of the difference in the RGB signal between the image formed on the standard paper and the image formed on the non-standard paper, which is acquired for each input image density Cin.

Here, a value obtained by subtracting the RGB signal of the image formed on the non-standard paper from the RGB signal of the image formed on the standard paper is shown as the difference in the RGB signal between the image formed on the standard paper and the image formed on the non-standard paper. As described above, the RGB signal of the image formed on the non-standard paper is larger than the RGB signal of the image formed on the standard paper. Thus, the difference in the RGB signal between the image formed on the standard paper and the image formed on the non-standard paper has a negative value. In the following description, "the magnitude of the difference between the RGB signals" means the magnitude of an absolute value of "the difference in the RGB signal between the image formed on the standard paper and the image formed on the non-standard paper".

In addition, Fig. 7 illustrates a linear approximation curve that approximates the difference in the RGB signal between the image formed on the standard paper and the image formed on the non-standard paper, which is acquired for each input image density Cin. Furthermore, Fig. 7 illustrates two types of non-standard paper A and non-standard paper B as examples of the non-standard paper different from the standard paper.

As described above, the difference between the RGB signal of the image formed on the standard paper and the RGB signal of the image formed on the non-standard paper tends to increase as the input image density Cin becomes more. As shown in the linear approximation curve in Fig. 7, the difference between the RGB signal of the image formed on the standard paper and the RGB signal of the image formed on the non-standard paper (non-standard paper A and non-standard paper B) is 0 in a case where the input image density Cin takes a specific value exceeding 100% (referred to as a provisional input image density Ct). The provisional input image density Ct in which the difference between the RGB signals is 0 has a value determined for each model of the image forming apparatus 100 and is uniform for each model of the image forming apparatus 100 regardless of the type of non-standard paper. In the present exemplary embodiment, the provisional input image density Ct is an example of a provisional image forming condition.

The server apparatus 200 in the present exemplary embodiment stores the provisional input image density Ct, for example, in the secondary storage unit 12 or the like in association with the model of the image forming apparatus 100. Further, the server apparatus 200 stores the RGB signal of the standard paper on which an image is not formed, as an example of the reference characteristic that is the characteristic of the standard recording medium on which the image is not formed, in the secondary storage unit 12 or the like.

The CPU 11a of the server apparatus 200 corrects the target value D used for evaluating the test image 610 formed on the chart paper CP and evaluates the test image 610, in accordance with the following procedure.

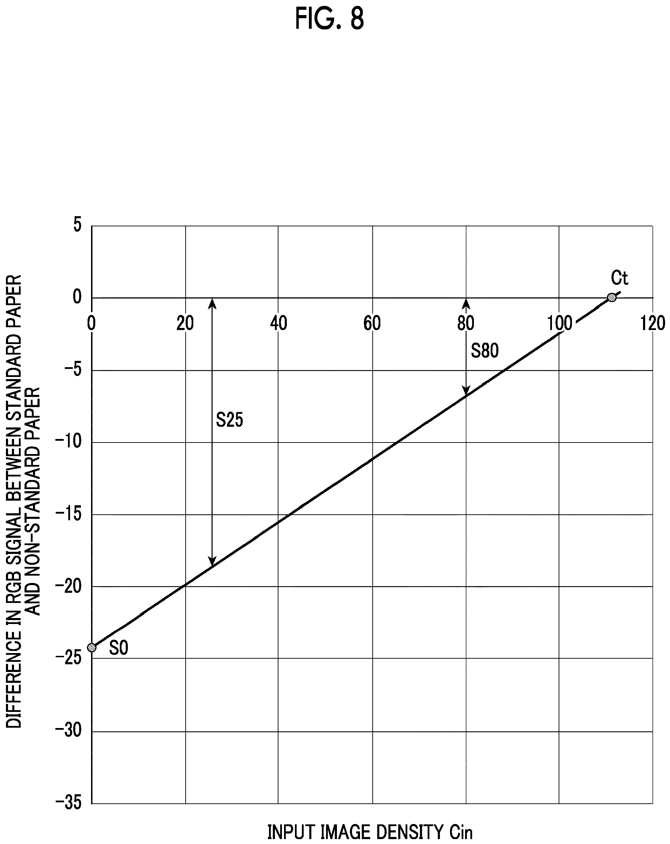

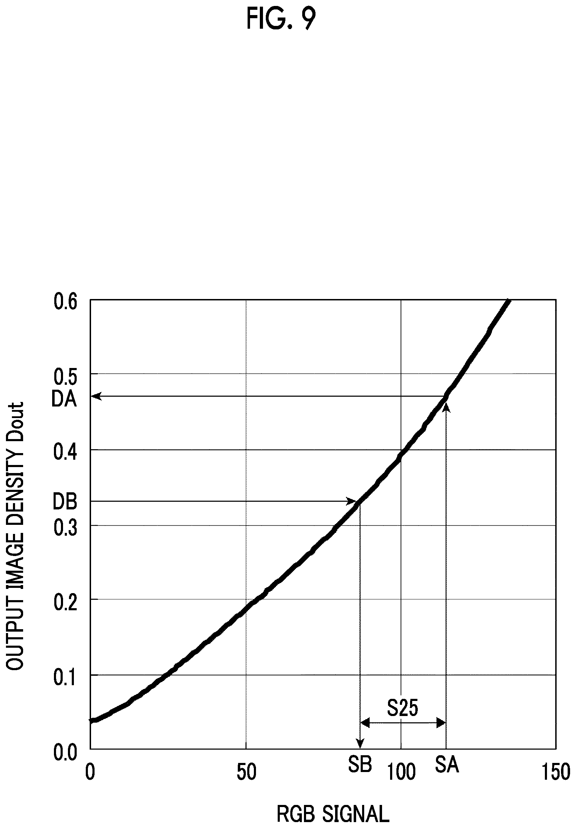

Figs. 8 and 9 are diagrams illustrating a procedure for correcting the target value D used for evaluating the test image 610. Fig. 8 is a diagram illustrating the relationship between the input image density Cin and the difference in the RGB signal between the image formed on the standard paper and the image formed on the chart paper CP. Fig. 9 is a diagram illustrating the correlation between the output image density Dout and the RGB signal of the image formed by the image forming unit 100A. Fig. 9 is a diagram corresponding to the IX portion in Fig. 5.

First, the CPU 11a acquires, as read image data, an RGB signal of each test image 610 of the chart image 61 formed on chart paper CP that is non-standard paper, and an RGB signal of the paper white region 70 of the chart paper CP.

Then, the CPU 11a calculates a difference S0 between the RGB signal of the standard paper and the RGB signal of the chart paper, from the RGB signal of the paper white region 70 of the chart paper CP and the RGB signal of the standard paper stored in the secondary storage unit 12 or the like.

Here, in the present exemplary embodiment, the RGB signal of the standard paper is an example of a reference characteristic that is a characteristic of a standard recording medium on which an image is not formed. Further, the RGB signal of the paper white region 70 of the chart paper CP is an example of a paper white characteristic.

Then, as illustrated in Fig. 8, the CPU 11a acquires an approximate straight line representing the relationship between the input image density Cin and the RGB signal of the image formed on the chart paper CP, based on the difference S0 between the RGB signal of the standard paper and the RGB signal of the chart paper CP, and a provisional input image density Ct stored in the secondary storage unit 12 or the like. In addition, in Fig. 8, the CPU 11a connects the difference S0 in the RGB signal between the standard paper and the chart paper CP in a case where the input image density Cin is 0, to the provisional input image density Ct that is the input image density Cin at which the difference in the RGB signal between the standard paper and the chart paper CP is 0. Thus, as illustrated in Fig. 8, the CPU 11a acquires the approximate straight line representing the relationship between the RGB signal of the image formed on the chart paper CP and the input image density Cin.

Then, the CPU 11a acquires the difference in the RGB signal between the standard paper and the chart paper CP, which corresponds to the input image density Cin of each test image 610 by using an approximate curve. Fig. 8 illustrates a difference S25 that is the difference in the RGB signal between the standard paper and the chart paper CP in a case where the input image density Cin is 25% (K25), and a difference S80 that is the difference in the RGB signal between the standard paper and the chart paper CP in a case where the input image density Cin is 80% (K80).

Then, the CPU 11a corrects the target value D for evaluating each test image 610 by using the difference in the RGB signal between the standard paper and the chart paper CP for each input image density Cin.

Here, a case where the CPU 11a corrects the target value D of a single-color image of the K color in which the input image density Cin is 25% (K25), as the test image 610, will be described as an example with reference to Fig. 9. In Fig. 9, the target value D before correction of the test image 610 is indicated by DB, and the target value D after the correction is indicated by DA.

First, the CPU 11a acquires an RGB signal corresponding to an uncorrected target value used for evaluating the test image 610, from the correlation between the output image density Dout and the RGB signal of the image formed by the image forming unit 100A illustrated in Fig. 9.

In this example, as illustrated in Fig. 9, the CPU 11a acquires an RGB signal SB corresponding to the uncorrected target value DB of the single-color image of the K color in which the input image density Cin is 25% (K25).

Then, the CPU 11a calculates an RGB signal obtained by subtracting the difference in the RGB signal between the standard paper and the chart paper CP, which is acquired for each input image density Cin, from the RGB signal corresponding to the calculated uncorrected target value. In other words, the CPU 11a adds the absolute value of the difference in the RGB signal between the standard paper and the chart paper CP, which is acquired for each input image density Cin, to the RGB signal corresponding to the calculated uncorrected target value.

In this example, the CPU 11a calculates an RGB signal SA obtained by subtracting the difference S25 that is the difference in the RGB signal between the standard paper and the chart paper CP in a case where the input image density Cin is 25% (K25), from the RGB signal SB corresponding to the uncorrected target value DB.

Then, the CPU 11a acquires, as a corrected target value DA, the output image density Dout corresponding to the calculated RGB signal, from the correlation between the output image density Dout and the RGB signal of the image formed by the image forming unit 100A illustrated in Fig. 9.

In this example, as illustrated in Fig. 9, the CPU 11a acquires, as the corrected target value DA, the output image density Dout corresponding to the RGB signal SA calculated from the RGB signal SB and the difference S25 which is the difference in the RGB signal between the standard paper and the chart paper CP.

Subsequently, the evaluation of the test image 610 performed by the CPU 11a of the server apparatus 200 will be described.

As described above, the CPU 11a evaluates the test image 610 by comparing the output image density Dout corresponding to the RGB signal of each test image 610 formed on the chart paper CP, to the target value D determined for each input image density Cin of each test image 610. In addition, the CPU 11a evaluates the test image 610 by comparing the output image density Dout corresponding to the RGB signal of each test image 610 to the target value D corrected based on the difference between the RGB signal of the paper white region 70 (see Fig. 4) of the chart paper CP and the RGB signal of the standard paper.

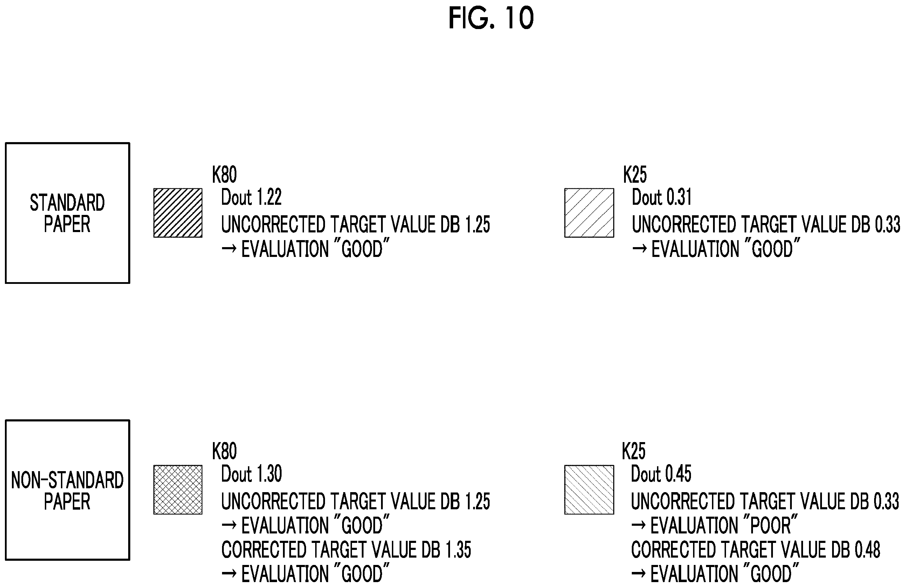

Fig. 10 is a diagram illustrating the evaluation of the test image 610 (see Fig. 4) performed by the CPU 11a (see Fig. 2) of the server apparatus 200 (see Fig. 1). Fig. 10 illustrates the evaluation of the test image 610 performed by the CPU 11a in a case where a single-color image of the K color in which the input image density Cin is 25% (K25) and 80% (K80) is formed as the test image 610.

In this example, the CPU 11a of the server apparatus 200 acquires a diagnosis result of a good evaluation (evaluation "good") in a case where the output image density Dout corresponding to the RGB signal of the test image 610 is in a range of ± 0.1 with respect to the predetermined target value D. In a case where the output image density Dout corresponding to the RGB signal of the test image 610 is out of the range of ± 0.1 with respect to the predetermined target value D, the CPU 11a acquires a diagnosis result of a bad evaluation (evaluation "bad").

First, the evaluation performed by the CPU 11a in a case where the chart paper CP on which the chart image 61 (see Fig. 4) including a plurality of test images 610 is formed is standard paper will be described.

As illustrated in Fig. 10, the output image density Dout corresponding to the RGB signal of the test image 610 of K80 formed on the standard paper is 1.22. Further, the target value D (uncorrected target value DB) of the output image density Dout predetermined for the test image 610 of K80 is 1.25. In this example, the output image density Dout (= 1.22) corresponding to the RGB signal of the test image 610 of K80 is in a range of ± 0.1 with respect to the target value D (uncorrected target value DB = 1.25). Thus, the CPU 11a acquires the diagnosis result of the evaluation "good" for the test image 610 of K80 formed on the standard paper.

Further, as illustrated in Fig. 10, the output image density Dout corresponding to the RGB signal of the test image 610 of K25 formed on the standard paper is 0.31. Further, the target value D (uncorrected target value DB) of the output image density Dout predetermined for the test image 610 of K25 is 0.33. In this example, the output image density Dout (= 0.31) corresponding to the RGB signal of the test image 610 of K25 is in a range of ± 0.1 with respect to the target value D (uncorrected target value DB = 0.33). Thus, the CPU 11a acquires the diagnosis result of the evaluation "good" for the test image 610 of K25 formed on the standard paper.

Subsequently, the evaluation performed by the CPU 11a in a case where the chart paper CP on which the chart image 61 including a plurality of test images 610 is formed is non-standard paper will be described. It is assumed that the test images of K80 and K25 formed on the non-standard paper, which are evaluated, in Fig. 10 are formed under the same image forming conditions as K80 and K25 formed on the above-described standard paper by the image forming unit 100A (see Fig. 1).

As illustrated in Fig. 10, the output image density Dout corresponding to the RGB signal of the test image 610 of K80 formed on the non-standard paper is 1.30. As described above, the target value D (uncorrected target value DB) of the output image density Dout predetermined for the test image 610 of K80 is 1.25. The target value D (corrected target value DA) corrected based on the difference between the RGB signal of the paper white region 70 of the chart paper CP and the RGB signal of the standard paper is 1.35. In this example, the output image density Dout (= 1.30) corresponding to the RGB signal of the test image 610 of K80 is in a range of ± 0.1 with respect to both the uncorrected target value DB (= 1.25) and the corrected target value DA (= 1.35).

Thus, the CPU 11a acquires the diagnosis result of an evaluation "good" for the test image 610 of K80 formed on the non-standard paper even in a case where any of the uncorrected target value DB (= 1.25) and the corrected target value DA (= 1.35) is adopted as the target value D.

On the other hand, as illustrated in Fig. 10, the output image density Dout corresponding to the RGB signal of the test image 610 of K25 formed on the non-standard paper is 0.45. As described above, the target value D (uncorrected target value DB) of the output image density Dout predetermined for the test image 610 of K25 is 0.33. The target value D (corrected target value DA) corrected based on the difference between the RGB signal of the paper white region 70 of the chart paper CP and the RGB signal of the standard paper is 0.48.

Here, in a case where the CPU 11a adopts the uncorrected target value DB (= 0.33) as the target value D, the output image density Dout (= 0.45) corresponding to the RGB signal of the test image 610 of K25 is out of the range of ± 0.1 with respect to the target value D (uncorrected target value DB = 0.33). In this case, the CPU 11a acquires the diagnosis result of the evaluation "poor" for the test image 610 of K25 formed on the non-standard paper.

That is, in a case where the CPU 11a adopts the uncorrected target value DB as the target value D, a different evaluation result is acquired between the test image 610 of K25 formed on the standard paper and the test image 610 of K25 formed on the non-standard paper, even though the test images 610 are formed under the same image forming condition by the image forming unit 100A.

As described above, in a case where the chart image 61 including the test image 610 is formed on the non-standard paper different from the predetermined standard paper, it may not possible to accurately evaluate the test image 610. In particular, in the test image 610 having a low input image density Cin, such a problem is likely to occur as compared with the test image 610 having a high input image density Cin.

On the other hand, in a case where the CPU 11a adopts the corrected target value DA (= 0.48) as the target value D, the output image density Dout (= 0.45) corresponding to the RGB signal of the test image 610 of K25 is in the range of ± 0.1 with respect to the target value D (corrected target value DA = 0.48). In this case, the CPU 11a acquires the diagnosis result of the evaluation "good" for the test image 610 of K25 formed on the non-standard paper.

That is, in a case where the CPU 11a adopts the corrected target value DA as the target value D, the same evaluation result is acquired between the test image 610 of K25 of the standard paper, which is formed by the image forming unit 100A under the same image forming condition, and the test image 610 of K25 of the non-standard paper.

Then, the CPU 11a of the server apparatus 200 outputs the evaluation result of each test image 610 as the diagnosis result of the image forming apparatus 100. For example, the CPU 11a outputs the evaluation result of each test image 610 from the server apparatus 200 to the user terminal 300.

The evaluation result of each test image 610 is displayed as a screen for displaying the diagnosis result, on the user terminal 300. As a result, the user may grasp the evaluation result of each test image 610, and grasp the state of the image forming apparatus 100, adjust the image forming apparatus 100, and the like based on the evaluation result.

Here, the CPU 11a of the server apparatus 200 in the present exemplary embodiment may output information regarding the difference between the characteristic of the paper white region 70 of the chart paper CP on which the chart image 61 including the test image 610 is formed, and the characteristic of the standard paper, together with the evaluation result of each test image 610. For example, the CPU 11a may output the information regarding the difference between the RGB signal of the paper white region 70 as an example of the characteristic of the paper white region 70 of the chart paper CP and the RGB signal of the standard paper as an example of the characteristic of the standard paper.

As a result, the user may grasp that the chart paper CP on which the chart image 61 is formed is the non-standard paper different from the predetermined standard paper. In addition, it is possible to know how much the characteristic of the paper white region 70 of the chart paper CP on which the chart image 61 is formed is different from the characteristic of the standard paper.

Further, the CPU 11a of the server apparatus 200 may output information regarding correction of the target value D of each test image 610 in addition to the information regarding the difference between the characteristic of the paper white region 70 of the chart paper CP on which the chart image 61 including the test image 610 is formed, and the characteristic of the standard paper. For example, the CPU 11a may output a difference between the uncorrected target value DB and the corrected target value DA, as the information regarding the correction of the target value D.

In this case, the user may know how much the target value D used for the evaluation is corrected, in addition to the evaluation result of each test image 610 and the characteristic of the paper white region 70 of the chart paper CP.

As described above, in the server apparatus 200 in the present exemplary embodiment, the CPU 11a corrects the target value used for evaluating the test image 610 formed on the chart paper CP, based on the difference between the characteristic of the paper white region 70 of the chart paper CP and the characteristic of the standard paper on which the image is not formed. Then, the CPU 11a evaluates the test image 610 by comparing the characteristic of each test image 610 to the corrected target value.

More specifically, the CPU 11a corrects the target value D of the output image density Dout used for evaluating the test image 610 formed on the chart paper CP, based on the difference between the RGB signal of the paper white region of the chart paper CP and the RGB signal of the standard paper. Then, the CPU 11a evaluates the test image 610 by using the corrected target value D (corrected target value DA).

Accordingly, in the present exemplary embodiment, even in a case where the chart image 61 including the test image 610 is formed on the non-standard paper different from the predetermined standard paper, it is easy to accurately evaluate the test image 610.

In addition, in the present exemplary embodiment, in a case where the chart image 61 including the test image 610 is formed on the non-standard paper, by evaluating the test image 610 by using the corrected target value D (corrected target value DA), it is easy to obtain the same evaluation result as the evaluation result in a case where the chart image 61 is formed on the standard paper.

In the above-described exemplary embodiment, an example in which the RGB signal of the test image 610 and the output image density Dout correlated with the RGB signal are provided as the characteristic of the test image 610 used for evaluating the test image 610 has been described. The present disclosure is not limited to this. For example, as the characteristic of the test image 610, other characteristics in which the numerical values are likely to change between the standard paper and the non-standard paper may be adopted even in a case where an image is formed under the same image forming condition. Examples of such a characteristic include lightness, brightness, and chroma of the test image 610.

Although the exemplary embodiment of the present invention has been described above, the present disclosure is not limited to the exemplary embodiment. Further, the effect of the exemplary embodiment of the present invention is not limited to the exemplary embodiment described above. Various changes and substitutions of configurations that do not depart from the scope of the technical idea of the present disclosure are included in the present disclosure.

### (Supplementary Note)

(((1))) An information processing apparatus comprising:
   a processor configured to:
   acquire information regarding characteristics of a test image on a recording medium, which is formed under a predetermined image forming condition by an image forming section, and a paper white region of the recording medium, in which the test image is not formed;
   output a comparison result obtained by comparing the characteristic of the test image formed on the recording medium to a target value corresponding to a characteristic in a case where the test image is formed on a predetermined standard recording medium under the image forming condition; and
   correct the target value based on a difference between a paper white characteristic and a reference characteristic, the paper white characteristic being a characteristic of the paper white region of the recording medium, and the reference characteristic being a characteristic of the standard recording medium on which an image is not formed.
(((2))) The information processing apparatus according to (((1))), wherein the processor is configured to:
   acquire information regarding characteristics of a plurality of test images with different image forming conditions;
   correct the target value for each of the image forming conditions, based on the difference between the paper white characteristic of the recording medium and the reference characteristic of the standard recording medium; and
   output the comparison result obtained by comparing the characteristic of each of the test images to the target value for each of the image forming conditions.
(((3))) The information processing apparatus according to (((2))), wherein the processor is configured to:
   calculate a difference between characteristics of images formed on the recording medium and the standard recording medium, based on the difference between the paper white characteristic of the recording medium and the reference characteristic of the standard recording medium, for each of the image forming conditions; and
   correct the target value for each of the image forming conditions, based on a difference in characteristic for each of the image forming conditions.
(((4))) The information processing apparatus according to (((3))), wherein the processor is configured to:
   calculate the difference in the characteristic for each of the image forming conditions, based on a provisional image forming condition in which the difference between the characteristics of the images formed on the recording medium and the standard recording medium is 0 in a graph indicating a relationship between the image forming condition and the difference between the characteristics of the images formed on the recording medium and the standard recording medium.
(((5))) The information processing apparatus according to any one of (((1))) to (((4))), wherein the processor is configured to:
   acquire information regarding an RGB signal of the test image formed with an image density predetermined as the image forming condition, as the information regarding the characteristic of the test image; and
   correct the target value based on a difference between an RGB signal in the paper white region of the recording medium, which is the paper white characteristic, and an RGB signal of the standard recording medium, which is the reference characteristic.
(((6))) The information processing apparatus according to any one of (((1))) to (((5))), wherein the processor is configured to:
   output information regarding the difference between the paper white characteristic of the recording medium and the reference characteristic of the standard recording medium, together with the comparison result.
(((7))) The information processing apparatus according to any one of (((1))) to (((6))), wherein the processor is configured to:
   output information regarding the correction of the target value.
(((8))) An information processing system comprising:
   an image forming apparatus that
      forms a test image on a recording medium under a predetermined image forming condition, and
      outputs reading information obtained by reading the test image and a paper white region in which the test image is not formed on the recording medium; and
   an information processing apparatus that
      acquires, from the reading information, information regarding characteristics of the test image on the recording medium and the paper white region, and
      outputs a comparison result obtained by comparing the characteristic of the test image formed on the recording medium to a target value corresponding to a characteristic in a case where the test image is formed on a predetermined standard recording medium under the image forming condition,
   wherein the information processing apparatus corrects the target value based on a difference between a paper white characteristic and a reference characteristic, the paper white characteristic being a characteristic of the paper white region of the recording medium, and the reference characteristic being a characteristic of the standard recording medium on which an image is not formed.
(((9))) A program causing a computer to realize:
   a function of acquiring information regarding characteristics of a test image on a recording medium, which is formed under a predetermined image forming condition by an image forming section, and a paper white region of the recording medium, in which the test image is not formed;
   a function of outputting a comparison result obtained by comparing the characteristic of the test image formed on the recording medium to a target value corresponding to a characteristic in a case where the test image is formed on a predetermined standard recording medium under the image forming condition; and
   a function of correcting the target value based on a difference between a paper white characteristic and a reference characteristic, the paper white characteristic being a characteristic of the paper white region of the recording medium, and the reference characteristic being a characteristic of the standard recording medium on which an image is not formed.

According to the information processing apparatus according to (((1))), it is possible to evaluate a test image formed on a recording medium with higher accuracy, as compared with a case where a target value of a characteristic is not corrected based on a measured value of a paper white region of a recording medium.

According to the information processing apparatus according to (((2))), it is possible to evaluate a plurality of test image with different image forming conditions, with higher accuracy, as compared with a case where a target value for each of image forming conditions is not corrected.

According to the information processing apparatus according to (((3))), it is possible to evaluate a test image with higher accuracy, as compared with a case where a target value for each of image forming conditions is not corrected based on a difference in characteristic for each of the image forming conditions.

According to the information processing apparatus according to (((4))), it is possible to evaluate a test image with higher accuracy, as compared with a case where a difference in characteristic for each of image forming conditions is not calculated based on a provisional image forming condition in which a difference between characteristics of images formed on a recording medium and a standard recording medium is 0.

According to the information processing apparatus according to (((5))), it is easy to accurately determine an image density of each test image, as compared with a case where a target value is not corrected based on RGB signals of a paper white region and a standard recording medium.

According to the information processing apparatus according to (((6))), a user can know information regarding a recording medium on which a test image is formed, in addition to an evaluation result of the test image.

According to the information processing apparatus according to (((7))), a user can know information regarding correction of a target value in addition to an evaluation result of a test image.

According to the information processing system according to (((8))), it is possible to evaluate a test image formed on a recording medium with higher accuracy, as compared with a case where a target value of a characteristic is not corrected based on a measured value of a paper white region of a recording medium.

According to the program according to (((9))), it is possible to evaluate a test image formed on a recording medium with higher accuracy, as compared with a case where a target value of a characteristic is not corrected based on a measured value of a paper white region of a recording medium.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: diagnosis system
11: arithmetic processing unit
11a: CPU
61: chart image
100: image forming apparatus
100A: image forming unit
130: image reading device
200: server apparatus
300: user terminal
610: test image

## Claims

1. An information processing apparatus comprising:
a processor configured to:
acquire information regarding characteristics of a test image on a recording medium, which is formed under a predetermined image forming condition by an image forming section, and a paper white region of the recording medium, in which the test image is not formed;
output a comparison result obtained by comparing the characteristic of the test image formed on the recording medium to a target value corresponding to a characteristic in a case where the test image is formed on a predetermined standard recording medium under the image forming condition; and
correct the target value based on a difference between a paper white characteristic and a reference characteristic, the paper white characteristic being a characteristic of the paper white region of the recording medium, and the reference characteristic being a characteristic of the standard recording medium on which an image is not formed.

2. The information processing apparatus according to claim 1, wherein the processor is configured to:
acquire information regarding characteristics of a plurality of test images with different image forming conditions;
correct the target value for each of the image forming conditions, based on the difference between the paper white characteristic of the recording medium and the reference characteristic of the standard recording medium; and
output the comparison result obtained by comparing the characteristic of each of the test images to the target value for each of the image forming conditions.

3. The information processing apparatus according to claim 2, wherein the processor is configured to:
calculate a difference between characteristics of images formed on the recording medium and the standard recording medium, based on the difference between the paper white characteristic of the recording medium and the reference characteristic of the standard recording medium, for each of the image forming conditions; and
correct the target value for each of the image forming conditions, based on a difference in characteristic for each of the image forming conditions.

4. The information processing apparatus according to claim 3, wherein the processor is configured to:
calculate the difference in the characteristic for each of the image forming conditions, based on a provisional image forming condition in which the difference between the characteristics of the images formed on the recording medium and the standard recording medium is 0 in a graph indicating a relationship between the image forming condition and the difference between the characteristics of the images formed on the recording medium and the standard recording medium.

5. The information processing apparatus according to any one of claims 1 to 4, wherein the processor is configured to:
acquire information regarding an RGB signal of the test image formed with an image density predetermined as the image forming condition, as the information regarding the characteristic of the test image; and
correct the target value based on a difference between an RGB signal in the paper white region of the recording medium, which is the paper white characteristic, and an RGB signal of the standard recording medium, which is the reference characteristic.

6. The information processing apparatus according to any one of claims 1 to 5, wherein the processor is configured to:
output information regarding the difference between the paper white characteristic of the recording medium and the reference characteristic of the standard recording medium, together with the comparison result.

7. The information processing apparatus according to any one of claims 1 to 6, wherein the processor is further configured to:
output information regarding the correction of the target value.

8. An information processing system comprising:
an image forming apparatus that
forms a test image on a recording medium under a predetermined image forming condition, and
outputs reading information obtained by reading the test image and a paper white region in which the test image is not formed on the recording medium; and
an information processing apparatus that
acquires, from the reading information, information regarding characteristics of the test image on the recording medium and the paper white region, and
outputs a comparison result obtained by comparing the characteristic of the test image formed on the recording medium to a target value corresponding to a characteristic in a case where the test image is formed on a predetermined standard recording medium under the image forming condition,
wherein the information processing apparatus corrects the target value based on a difference between a paper white characteristic and a reference characteristic, the paper white characteristic being a characteristic of the paper white region of the recording medium, and the reference characteristic being a characteristic of the standard recording medium on which an image is not formed.

9. A program causing a computer to realize:
a function of acquiring information regarding characteristics of a test image on a recording medium, which is formed under a predetermined image forming condition by an image forming section, and a paper white region of the recording medium, in which the test image is not formed;
a function of outputting a comparison result obtained by comparing the characteristic of the test image formed on the recording medium to a target value corresponding to a characteristic in a case where the test image is formed on a predetermined standard recording medium under the image forming condition; and
a function of correcting the target value based on a difference between a paper white characteristic and a reference characteristic, the paper white characteristic being a characteristic of the paper white region of the recording medium, and the reference characteristic being a characteristic of the standard recording medium on which an image is not formed.
